# EUROPÄISCHE PATENTANMELDUNG

(11) **EP 1 494 015 A1**
(43) Veröffentlichungstag der Anmeldung: **05.01.2005**
(21) Anmeldenummer: 04101818.5
(22) Anmeldetag: 29.04.2004
(51) Int. Cl.: G01N 21/95

(54) **Vorrichtung zur Inspektion eines Wafers**

(30) Priorität: 03.07.2003 DE 10330005
(71) Anmelder: Leica Microsystems Semiconductor GmbH, 35578 Wetzlar (DE)
(72) Erfinder: Kreh, Albert, Strasse 17-37, 35578 Wetzlar (DE); Backhauss, Henning, Strasse 17-37, 35578 Wetzlar (DE)
(74) Vertreter: Reichert, Werner F., Dr.

(57) **Zusammenfassung**

Die Erfindung betrifft eine Vorrichtung zur Inspektion eines Wafers, umfassend zumindest eine Auflicht-Beleuchtungseinrichtung (2), die einen Beleuchtungs-Lichtstrahl (37) abstrahlt, der schräg auf eine Oberfläche (32) eines zu inspizierenden Wafers (6) einfällt, und eine Bilderfassungseinrichtung (4) zum Erfassen eines Bildes der Oberfläche in einer Dunkelfeld-Anordnung. Die Wafer-Inspektionsvorrichtung zeichnet sich dadurch aus, dass zumindest eine Umlenkeinrichtung (18) vorgesehen ist, um einen zugeordneten Beleuchtungs-Lichtstrahl auf die Oberfläche des Wafers umzulenken.

## Beschreibung

Die vorliegende Erfindung betrifft eine Vorrichtung zur Inspektion eines Wafers und betrifft insbesondere eine Vorrichtung zur Detektion von Makro-Defekten auf der Oberfläche von Wafern.

In der Halbleiterfertigung werden Wafer während des Fertigungsprozesses in einer Vielzahl von Prozessschritten sequenziell bearbeitet. Mit zunehmender Integrationsdichte steigen die Anforderungen an die Qualität von auf dem Wafer ausgebildeten Strukturen. Zu diesem Zweck ist es von Vorteil, wenn man die Qualität auch einzelner Prozessschritte, beispielsweise von Lithographieschritten, während des Herstellungsprozesses und noch vor einem nachgeordneten Prozessschritt zuverlässig beurteilen kann. Denn wird bereits nach Ausführung eines Prozessschrittes und vor einem vollständigen Abschluss eines Fertigungsprozesses bestimmt, dass ein Wafer oder auf dem Wafer ausgebildete Strukturen fehlerhaft sind, so kann der Wafer unmittelbar ausgesondert werden, ohne dass noch nachgeordnete Prozessschritte ausgeführt werden müssen. Oder der für fehlerhaft befundene Wafer kann gesondert nachbehandelt werden, bis eine zufrieden stellende Qualität erzielt ist. Auf diese Weise können die Effizienz und Ausbeute in der Halbleiterfertigung erhöht werden.

Zur Inspektion der Oberfläche von Wafern eignen sich insbesondere optische Vorrichtungen. Es sind optische Vorrichtungen bekannt, die durch Bilderkennung verschiedenste Strukturen auf der Oberfläche eines Wafers erkennen können. Hierbei wird der Wafer üblicherweise im Hellfeld beleuchtet und mit einer Kamera (Matrix- oder Zeilenkamera) abgetastet.

Eine solche Inspektionsvorrichtung der KLA-Tencor Corporation wird in dem Artikel "Lithography Defects: Reducing and Managing Yield Killers through Photo Cell Monitoring" von Ingrid Peterson, Gay Thompson, Tony DiBiase und Scott Ashkenaz, Spring 2000, Yield Management Solutions, beschrieben. Die dort beschriebene Wafer-Inspektionsvorrichtung arbeitet mit einer Auflicht-Beleuchtungseinrichtung, welche mit einer Hellfeld-/ Dunkelfeldbeleuchtung Mikrodefekte mit geringem Kontrast untersucht.

US 4,772,126 offenbart eine Vorrichtung und ein Verfahren zur Detektion von Teilchen auf der Oberfläche eines Wafers. Der Wafer ist drehbar auf einer Wafer-Aufnahmeeinrichtung gehalten. Zwei Laserstrahlen fallen in der Projektion auf die Oberfläche des Wafers orthogonal zueinander unter einem streifenden Einfallswinkel auf die Oberfläche des Wafers ein. Streulicht, das von Defekten und Partikeln auf der Oberfläche des Wafers in dem beleuchteten Bereich herrührt, wird in einer Dunkelfeldanordnung in eine senkrecht zu der Oberfläche des Wafers ausgerichtete Bilderfassungseinrichtung abgebildet und nachgeordnet ausgewertet. Die Laserstrahlen werden mit Hilfe von Linsen, die an dem Umfangsrand des Wafers angeordnet sind, auf die Oberfläche des Wafers abgebildet. Dabei muss ein gewisser Mindestabstand zwischen Linse und Umfangsrand des Wafers eingehalten werden, was die Möglichkeiten bei der Abbildung erheblich einschränkt.

US 6,292,260 B1 offenbart eine Vorrichtung und ein Verfahren zur optischen Inspektion von Oberflächenstrukturen auf einem Wafer. Zwei Laserstrahlen fallen gegenläufig und unter einem streifenden Einfallswinkel auf die Oberfläche eines Wafers ein, wobei eine Projektion der Beleuchtungs-Lichtstrahlen auf die Oberfläche des Wafers mit auf der Oberfläche des Wafers verlaufenden linienförmigen Strukturen jeweils einen Winkel von 45° einschließt. Die Laserlichtquellen sind unmittelbar an dem Umfangsrand des Wafers angeordnet, was die Grundfläche der Inspektionsvorrichtung vergrößert und im Hinblick auf die Durchführung von Schmutz verursachenden Wartungsarbeiten an den Laserlichtquellen nachteilig ist.

WO 99/02977 offenbart eine Vorrichtung und ein Verfahren zur Inspektion der Oberfläche eines Wafers, wobei ein oder zwei Laserstrahlen in der Projektion auf die Oberfläche des Wafers unter 45° zu den Strukturen auf dem Wafer einfällt bzw. einfallen. Direkt von der Oberfläche des Wafers reflektiertes Licht und Beugungsordnungen, die von einer Beugung des einfallenden Lichts an den Strukturen auf der Oberfläche des Wafers herrühren, werden in einer Hellfeldanordnung mit Hilfe einer Bilderfassungseinrichtung spektral aufgelöst detektiert und ausgewertet.

Bei den vorgenannten Inspektionsvorrichtungen sind die Variationsmöglichkeiten bei der Abbildung der Beleuchtungs-Lichtstrahlen auf die Oberfläche des Wafers eingeschränkt. Nachteilig ist ferner, dass die Justierung von Lichtquellen und abbildenden optischen Elementen, die in der Nähe des Umfangsrands des Wafers angeordnet sind, schwierig ist und zu Beschädigungen der Waferoberfläche führen kann.

Aufgabe der vorliegenden Erfindung ist es, eine Vorrichtung zur Inspektion eines Wafers zu schaffen, bei der die Variationsmöglichkeiten zur Abbildung der Beleuchtungs-Lichtstrahlen größer sind und bei der eine einfachere Justierung der Beleuchtungs-Lichtstrahlen erzielt werden kann. Ferner soll eine Vorrichtung zur Inspektion von Wafern mit einer vergleichsweise kleinen Grundfläche geschaffen werden.

Diese Aufgabe wird gelöst durch eine Vorrichtung zur Inspektion eines Wafers mit den Merkmalen nach Anspruch 1. Vorteilhafte weitere Ausführungsformen sind der Gegenstand der rückbezogenen Unteransprüche.

Gemäß der vorliegenden Erfindung umfasst die Wafer-Inspektionsvorrichtung eine Auflicht-Beleuchtungseinrichtung, die einen Beleuchtungs-Lichtstrahl abstrahlt, der schräg auf eine Oberfläche eines zu inspizierenden Wafers einfällt, sowie eine Bilderfassungseinrichtung zum Erfassen eines Bildes der Oberfläche in einer Dunkelfeldanordnung. Die Vorrichtung zeichnet sich dadurch aus, dass zumindest eine Umlenkeinrichtung vorgesehen ist, um einen zugeordneten Beleuchtungs-Lichtstrahl auf die Oberfläche des zu inspizierenden Wafers umzulenken.

Mit der Umlenkung des zumindest einen Beleuchtungs-Lichtstrahls in eine andere Richtung steht bei der erfindungsgemäßen Vorrichtung ein zusätzlicher Freiheitsgrad zur Verfügung, der die Variationsmöglichkeiten bei der Auslegung von Wafer-Inspektionsvorrichtungen vorteilhaft vergrößert und der eine einfachere Justierung ermöglichet. Auf Grund der Umlenkung des zumindest einen Beleuchtungs-Lichtstrahls in eine andere Richtung müssen vergleichsweise voluminöse Abbildungsoptiken, beispielsweise Linsen oder Objektive, die zur Abbildung und Strahlformung der Beleuchtungs-Lichtstrahlen auf die Oberfläche des Wafers verwendet werden, nicht unbedingt in der unmittelbaren Nähe des Umfangsrands des Wafers angeordnet werden, sondern können diese vielmehr unter einem größeren Abstand zum Wafer und an einem geeigneten anderen Ort in der Wafer-Inspektionsvorrichtung angeordnet werden. Auch die Auflicht-Beleuchtungseinrichtungen selbst können noch variabler in der Wafer-Inspektionsvorrichtung angeordnet werden, beispielsweise im Wesentlichen senkrecht oberhalb des Wafers, so dass die Grundfläche der Wafer-Inspektionsvorrichtung noch weiter verringert werden kann. Ferner können die Auflicht-Beleuchtungseinrichtungen auch noch variabler orientiert werden, beispielsweise senkrecht zur Oberfläche des Wafers ausgerichtet werden. Zur Justierung der Wafer-Inspektionsvorrichtung kann es genügen, lediglich die Umlenkeinrichtung und nicht auch andere Elemente, wie beispielsweise abbildende Optiken oder die Auflicht-Beleuchtungseinrichtung, zu justieren.

Der von der mindestens einen Auflicht-Beleuchtungseinrichtung abgestrahlte Beleuchtungs-Lichtstrahl fällt schräg auf die Oberfläche des zu inspizierenden Wafers ein und wird somit unter einem nicht verschwindenden Ausfallswinkel relativ zu einer Normalen auf die Oberfläche des Wafers reflektiert. Die Bilderfassungseinrichtung ist in einer Dunkelfeld-Anordnung angeordnet, so dass das von der Oberfläche des Wafers reflektierte Beleuchtungslicht vorzugsweise vollständig aus der Bilderfassungseinrichtung ausgeblendet ist und diese vielmehr nur Streulicht oder gebeugtes Licht, das von einem beleuchteten Bereich auf der Oberfläche des Wafers herrührt, erfasst. Das erfasste Bild wird vorzugsweise digital ausgelesen und weiterverarbeitet. Die Auflicht-Beleuchtungseinrichtung kann die gesamte Oberfläche des Wafers oder vorgebbare Unterabschnitte auf der Oberfläche des Wafers, beispielsweise Dies oder mehrere Dies umfassende Unterabschnitte, beleuchten. Vorzugsweise entspricht das Bildfeld der Bilderfassungseinrichtung dem beleuchteten Oberflächenbereich.

Bevorzugt bildet die Umlenkeinrichtung den zugeordneten Beleuchtungs-Lichtstrahl unmittelbar, das heißt ohne Verwendung nachgeordneter Abbildungsoptiken, auf die Oberfläche des Wafers ab. Beispielsweise kann die Umlenkeinrichtung ein Spiegel sein, der einen divergenten Beleuchtungs-Lichtstrahl direkt auf die Oberfläche des Wafers reflektiert. Oder die Umlenkeinrichtung kann ein konvex oder konkav gewölbter Hohlspiegel sein, der neben der Umlenkung des Beleuchtungs-Lichtstrahls auch für eine geeignete Aufweitung oder Fokussierung desselben sorgt. Oder die Umlenkeinrichtung kann ein diffraktives optisches Element sein, beispielsweise ein Beugungsgitter, das den Beleuchtungs-Lichtstrahl geeignet formt und abbildet. Oder die Umlenkeinrichtung kann ein refraktives optisches Element sein, beispielsweise ein Prisma oder eine Prismenanordnung, das den Beleuchtungs-Lichtstrahl geeignet formt und abbildet. Weil die Grundfläche von Spiegeln, Hohlspiegeln, diffraktiven Optiken, refraktiven Optiken oder vergleichbaren Umlenkeinrichtungen vergleichsweise klein ist, können die Umlenkeinrichtungen unmittelbar am Umfangsrand des Wafers oder oberhalb von diesem auch unter einem geringen Abstand zur Oberfläche des Wafers angeordnet werden, was die Variationsmöglichkeiten bei der Abbildung der Beleuchtungs-Lichtstrahlen vorteilhaft erhöht.

Gemäß einer ganz besonders bevorzugten Ausführungsform umfasst die Umlenkeinrichtung jeweils einen Spiegel, der den Beleuchtungs-Lichtstrahl auf die Oberfläche des Wafers reflektiert. Der Spiegel ist bevorzugt ein planer Spiegel. In dieser Anordnung kann die Auflicht-Beleuchtungseinrichtung, in einer Draufsicht auf die Wafer-Inspektionsvorrichtung betrachtet, oberhalb oder neben dem Wafer angeordnet sein. Grundsätzlich kann die Auflicht-Beleuchtungseinrichtung beliebig orientiert sein. Ganz besonders bevorzugt ist die Auflicht-Beleuchtungseinrichtung jedoch im Wesentlichen senkrecht oder parallel zu der Oberfläche des Wafers ausgerichtet.

Gemäß einer weiteren besonders bevorzugten Ausführungsform umfasst die zumindest eine Umlenkeinrichtung jeweils eine Periskop-Anordnung von Spiegeln, die den Strahlengang des zugeordneten Beleuchtungs-Lichtstrahls faltet. Die Spiegel der Periskop-Anordnung sind bevorzugt parallel zueinander, aber höhenversetzt, ganz besonders bevorzugt senkrecht übereinander angeordnet, so dass der Beleuchtungs-Lichtstrahl von einem ersten, höheren Höhenniveau auf ein zweites, tiefer liegendes Höhenniveau umgelenkt wird.

Bevorzugt ist der oder sind die Spiegel der Umlenkeinrichtung verschwenkbar und/oder verfahrbar gehaltert, so dass der Einfallswinkel, unter dem der Beleuchtungs-Lichtstrahl auf die Oberfläche des Wafers einfällt, variiert werden kann. Bevorzugt ist die Umlenkeinrichtung so ausgelegt, dass zum Verändern des Einfallswinkels weder der Wafer noch die Auflicht-Beleuchtungseinrichtung verfahren werden muss.

Durch den vorgenannten Höhenversatz des Beleuchtungs-Lichtstrahls bei der Abbildung auf die Oberfläche des Wafers können die Auflicht-Beleuchtungseinrichtung, Abbildungsoptiken und weitere optische Elemente, beispielsweise Filter, Strahlteilerspiegel etc., so angeordnet werden, dass eine Luftstromführung von Reinraumluft durch die Wafer-Inspektionsvorrichtung weniger behindert wird. Bekanntermaßen werden Wafer-Inspektionsvorrichtungen in Reinräumen eingesetzt, wo es gilt, eine permanente Luftzirkulation aufrecht zu erhalten, so dass sich keine störenden Partikel auf der Oberfläche eines Wafers ablagern können. Somit ist darauf zu achten, dass die Luftstromführung der Reinraumluft möglichst wenig behindert wird. Die Luftstromführung der Reinraumluft durch die Wafer-Inspektionsvorrichtung wird insbesondere durch die vergleichsweise großen Auflicht-Beleuchtungseinrichtungen, beispielsweise Laserlichtquellen, Blitzlichtlampen, Faseroptiken etc., sowie durch voluminöse Abbildungsoptiken selbst behindert. Gemäß der vorliegenden Erfindung können solche, die Zirkulation der Reinraumluft behindernden Elemente an solchen Positionen innerhalb oder auch außerhalb der Wafer-Inspektionsvorrichtung angeordnet werden, wo diese am wenigsten stören.

Gemäß einer bevorzugten Ausführungsform wird die Wafer-Inspektionsvorrichtung mit Hilfe einer im Wesentlich horizontal orientieren Trennplatte räumlich unterteilt. Die Trennplatte weist zumindest eine Öffnung auf, so dass der einfallende Beleuchtungs-Lichtstrahl und/oder Licht von der Oberfläche des Wafers die Trennplatte in vertikaler Richtung durchqueren kann. Bevorzugt ist die Wafer-Inspektionsvorrichtung so ausgelegt, dass der Wafer unterhalb der Trennplatte anordenbar ist und dass oberhalb der Trennplatte die zumindest eine Auflicht-Beleuchtungseinrichtung und/oder die Bilderfassungseinrichtung sowie die wichtigsten optischen Elemente zur Abbildung des zugeordneten Beleuchtungs-Lichtstrahls auf die Oberfläche des Wafers angeordnet sind. Vorteilhaft ist, dass die Trennplatte den unterhalb der Trennplatte befindlichen Wafer schützt. Somit ist der Wafer im Falle von Wartungs- und Montagearbeiten oberhalb der Trennplatte geschützt. Die räumliche Unterteilung verringert die Kosten der Wafer-Inspektionsvorrichtung und vereinfacht den Aufwand bei Wartung, Betrieb und Instandhaltung der Wafer-Inspektionsvorrichtung.

Bevorzugt ist der Wafer unterhalb der Trennplatte verfahrbar gehaltert. Zu diesem Zweck kann ein Verfahrtisch mit einer zugehörigen Wafer-Aufnahmeeinrichtung unterhalb der Trennplatte vorgesehen sein. Die Trennplatte schützt die oberhalb von dieser angeordneten Elemente, beispielsweise die Auflicht-Beleuchtungseinrichtungen, die Bilderfassungseinrichtung und abbildende optische Elemente, vor einer mechanischen Beschädigung durch den Verfahrtisch. Umgekehrt können Wartungs- und Montagearbeiten an oberhalb der Trennplatte angeordneten Elementen vorgenommen werden, ohne dass eine Verletzungsgefahr aufgrund eines raschen Verfahrens des Verfahrtisches oder des Wafers besteht.

Die Öffnungen in der Trennplatte können durch ein transparentes Element, beispielsweise eine transparente Scheibe, luftdicht verschlossen sein. Das in der zumindest einen Öffnung vorgesehene transparente Element kann auch als Homogenisierungsmittel zur Homogenisierung des Beleuchtungs-Lichtstrahls verwendet werden, beispielsweise in Form einer Streuscheibe vorliegen, oder kann einer weiteren Abbildung und Formung des Beleuchtungs-Lichtstrahls dienen, beispielsweise in Form einer Linse. Zur Homogenisierung des Beleuchtungs-Lichtstrahls kann auch die Oberfläche eines als Umlenkeinrichtung dienenden Spiegels aufgeraut oder entsprechend mechanisch bearbeitet sein.

Bevorzugt ist die von der Bilderfassungseinrichtung festgelegte Abbildungsachse senkrecht zur Oberfläche des zu inspizierenden Wafers orientiert, so dass die Dunkelfeld-Anordnung durch einen schrägen Einfall des Beleuchtungslichts auf die Oberfläche realisiert wird. Grundsätzlich kann die Abbildungsachse jedoch auch geneigt zur Oberfläche des Wafers sein, solange nicht der Beleuchtungswinkel gleich dem Abbildungswinkel ist, da sich sonst die Dunkelfeld-Anordnung nicht mehr realisieren lassen würde. Bevorzugt ist die Bilderfassungseinrichtung ortsfest relativ zu der Oberfläche des Wafers.

Bevorzugt spannen die von der Auflicht-Beleuchtungseinrichtung festgelegte Beleuchtungsachse und die von der Bilderfassungseinrichtung festgelegte Abbildungsachse eine Ebene auf, die senkrecht zu der Oberfläche des Wafers orientiert ist. In dieser Anordnung lassen sich die Auflicht-Beleuchtungseinrichtung und die Bilderfassungseinrichtung in vorteilhaft einfacher Weise ausrichten. Grundsätzlich kann die vorgenannte Ebene die Oberfläche des Wafers auch unter einem anderen Winkel schneiden, bis hin zu einem Relativwinkel von nur wenigen Grad.

Um die Vorrichtung noch flexibler auszulegen, kann der Einfallswinkel a des Beleuchtungs-Lichtstrahls auch verändert werden, wobei bevorzugt ein von dem einfallenden Beleuchtungs-Lichtstrahl beleuchteter Bereich auf der Oberfläche des Wafers beim Verändern des Einfallswinkels ortsfest bleibt, so dass die Orientierung der Bilderfassungseinrichtung vorteilhafterweise nicht verändert werden muss. Durch Verändern des Einfallswinkels a können somit Defekte auf der Oberfläche des Wafers unter verschiedenen Beleuchtungs-Bedingungen festgestellt und beurteilt werden.

Zum Ändern des Einfallswinkels a kann die Auflicht-Beleuchtungseinrichtung einen a-Winkelverstellmechanismus aufweisen, beispielsweise eine bogenförmige Justierschiene, entlang der die Auflicht-Beleuchtungseinrichtung verschoben werden kann, wobei der Radius der Justierschiene auf den Abstand zwischen der Auflicht-Beleuchtungseinrichtung und dem Auftreffpunkt der Beleuchtungsachse auf der Oberfläche des Wafers so abgestimmt ist, dass der beleuchtete Bereich auf der Oberfläche des Wafers beim Verändern des Einfallswinkels ortsfest bleibt.

Der Einfallswinkel kann bei der erfindungsgemäßen Vorrichtung über einen großen Bereich variiert werden, etwa im Bereich zwischen etwa 3° bis etwa 90°, bevorzugter im Bereich von etwa 20° bis etwa 90°. Besonders bevorzugt werden gemäß der vorliegenden Erfindung Einfallswinkel im Bereich von etwa 40° Grad bis etwa 86°. Es sei jedoch darauf hingewiesen, dass grundsätzlich auch ein streifender Einfall des Beleuchtungslichts auf die Oberfläche des Wafers in Betracht kommt.

Bei der zumindest einen Auflicht-Beleuchtungseinrichtung kann es sich um eine monochromatische Lichtquelle handeln, beispielsweise um eine LED oder LED-Zeilenanordnung, in welchem Falle auch eine schwarz/weiß-Bilderfassungseinrichtung verwendet werden kann. Bevorzugt ist die Auflicht-Beleuchtungseinrichtung jedoch eine polychromatische Lichtquelle, beispielsweise eine Blitzlichtquelle oder eine Blitzlichtquellen-Zeilenanordnung, in welchem Falle das von der Bilderfassungseinrichtung erfasste Streulicht spektral aufgelöst detektiert und analysiert wird. Auch aus der spektralen Streulichtverteilung lässt sich weitere Information bezüglich der Ursache für Defekte gewinnen.

Gemäß einer weiteren Ausführungsform umfasst die Wafer-Inspektionsvorrichtung außerdem eine Wafer-Aufnahmeeinrichtung, an die der zu inspizierende Wafer ausgerichtet übergebbar ist. Zur Ausrichtung des Wafers kann der Wafer-Inspektionsvorrichtung ein Prealigner zugeordnet sein, welcher die Lage eines Notches oder Flats auf dem Außenumfang des Wafers bestimmt, den Wafer anhand des Notches oder Flats ausrichtet und dann unter Beibehaltung der vorgegebenen Orientierung an die Wafer-Aufnahmeeinrichtung übergibt. In Kenntnis des Layouts der auf dem Wafer auszubildenden Strukturen kann dann die Orientierung der von dem jeweiligen Beleuchtungs-Lichtstrahl festgelegten Beleuchtungsachse so abgestimmt werden, dass deren Projektion auf die Oberfläche des Wafers unter einer vorgebbaren Orientierung zu den Strukturen auf der Oberfläche des Wafers ausgerichtet ist. Solche Strukturen können auf der Oberfläche des zu inspizierenden Wafers im Wesentlichen linienförmig verlaufen.

Zur Inspektion von Makro-Defekten wird vorzugsweise eine Bilderfassungseinrichtung verwendet, die ein Objektiv und eine Zeilen- oder Matrixkamera umfasst. Zur automatischen Inspektion der Oberfläche des Wafers ist die erfindungsgemäße Vorrichtung mit einer Datenausleseeinrichtung, beispielsweise Computer oder Framegrabber, verbunden, welche die Bilddaten der Zeilen- oder Matrixkamera sequenziell ausliest. Aus den ausgelesenen Bilddaten können dann Kenngrößen oder Defekte des Wafers bestimmt werden. Insbesondere kann die Auswertung von Defekten auf der Oberfläche des Wafers auch ortsaufgelöst ausgeführt werden, zu welchem Zweck die Daten aus der Datenausleseeinrichtung beispielsweise an Markierungen auf der Oberfläche des Wafers oder an dem Rand des Wafers ausgerichtet werden.

Nachfolgend wird die Erfindung in beispielhafter Weise unter Bezugnahme auf die beigefügten Figuren beschrieben werden, woraus sich weitere Merkmale, Vorteile und zu lösende Aufgaben ergeben. In den Figuren zeigen:
- Fig. 1: einen Querschnitt durch eine erste Ausführungsform einer Wafer-Inspektionsvorrichtung gemäß der vorliegenden Erfindung;
- Fig. 2: eine Draufsicht auf die Vorrichtung gemäß der Fig. 1;
- Fig. 3: einen Querschnitt durch eine weitere Ausführungsform einer Wafer-Inspektionsvorrichtung gemäß der vorliegenden Erfindung;
- Fig. 4: einen Querschnitt durch eine weitere Ausführungsform einer Wafer-Inspektionsvorrichtung gemäß der vorliegenden Erfindung; und
- Fig. 5: eine schematische perspektivische Ansicht einer weiteren Ausführungsform einer Wafer-Inspektionsvorrichtung gemäß der vorliegenden Erfindung.

In den Figuren bezeichnen identische Bezugszeichen identische oder gleichwirkende Elemente oder Baugruppen.

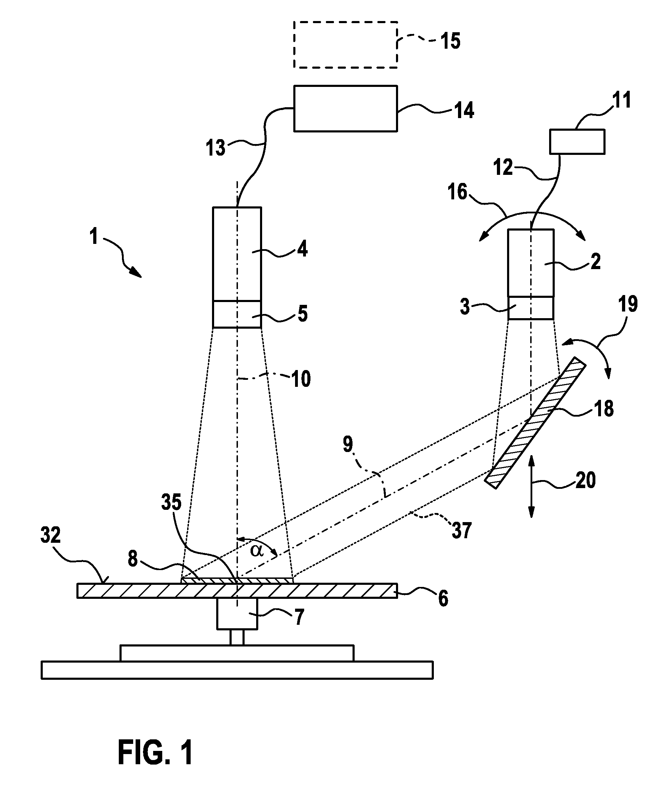

Die Fig. 1 zeigt in einem schematischen Querschnitt eine Wafer-Inspektionsvorrichtung 1 gemäß der vorliegenden Erfindung. Diese umfasst eine Auflicht-Beleuchtungseinrichtung 2, die eine Beleuchtungsachse 9 festlegt, welche die Oberfläche 32 des Wafers 6 in dem Auftreffpunkt 35 schneidet, eine als Bilderfassungseinrichtung dienende Kamera 4 sowie eine Wafer-Aufnahmeeinrichtung 7, die den Wafer 6 ortsfest oder auch drehbar hält. Auf der Wafer-Aufnahmeeinrichtung 7 wird der Wafer 6 mittels Vakuum angesaugt. Die Auflicht-Beleuchtungseinrichtung 2 weist ein abbildendes optisches Element 3 auf, das den Beleuchtungs-Lichtstrahl 37 formt, so dass der geneigt auf die Oberfläche 32 des zu inspizierenden Wafers 6 einfallende Beleuchtungs-Lichtstrahl 37 einen entsprechenden Bereich 8 ausleuchtet, der die gesamte Oberfläche des Wafers 6 oder einen Unterbereich davon, beispielsweise einzelne Dies, überdeckt.

Die Kamera 4 steht senkrecht auf der Oberfläche 32 des Wafers 6 und legt eine Abbildungsachse 10 fest, welche die Oberfläche 32 des Wafers 6 in dem Auftreffpunkt 35 schneidet. An dem vorderen Ende der Kamera 4 ist ein Objektiv 5 angeordnet, so dass der beleuchtete Bereich 8 in die Kamera 4 abgebildet wird. Die Abbildungsachse 10 und die Beleuchtungsachse 9 spannen eine Ebene auf, die orthonormal zu der Oberfläche 32 des Wafers 6 ist. Grundsätzlich kann diese Ebene die Oberfläche 32 des Wafers 6 auch unter einem anderen Winkel schneiden.

In der Fig. 1 sind die Kamera 4 und die Auflicht-Beleuchtungseinrichtung 2 in einer Dunkelfeld-Anordnung angeordnet, so dass direkt von der Oberfläche 32 des Wafers 6 reflektiertes Beleuchtungslicht nicht in die Kamera 4 abgebildet wird, sondern nur Streulicht, das von Defekten auf der Oberfläche 32 des Wafers 6 in dem beleuchteten Bereich 8 herrührt. Wie in der Fig. 1 dargestellt, ist die Beleuchtungsachse 9 zu der Oberfläche 32 des Wafers 6 geneigt. Die Beleuchtungsachse 9 schließt mit der Abbildungsachse 10, die bei dem dargestellten Beispiel einer Normalen auf die Oberfläche 32 des Wafers 6 entspricht, den Einfallswinkel a ein. Der Einfallswinkel a wird geeignet gewählt, was auch von den auf dem Wafer 6 auszubildenden Strukturen abhängig sein kann. Wenngleich der Einfallswinkel a grundsätzlich über einen weiten Bereich variiert werden kann, etwa von 3° bis etwa 90°, bevorzugter von etwa 20° bis etwa 90°, wird bevorzugt, wenn der Beleuchtungs-Lichtstrahl auf die Oberfläche 32 des Wafers 6 unter einem Einfallswinkel a im Bereich von etwa 40° Grad bis etwa 86° einfällt.

Wie in der Fig. 1 gezeigt, wird der Beleuchtungs-Lichtstrahl 37 mit Hilfe des als Umlenkeinrichtung dienenden Umlenkspiegels 18 in eine andere Raumrichtung umgelenkt. Der von der Oberfläche des Umlenkspiegels 18 reflektierte Beleuchtungs-Lichtstrahl 37 wird unmittelbar auf die Oberfläche 32 des Wafers 6 abgebildet. Wie durch die Doppelpfeile 19 und 20 angedeutet, kann der Umlenkspiegel 18 verschwenkt und in der Höhe verfahren werden. Gemeinsam mit der durch den Doppelpfeil 16 angedeuteten Verschwenkmöglichkeit der Auflicht-Beleuchtungseinrichtung 2 kann somit der Einfallswinkel α über einen weiten Bereich verändert werden.

Wie sich aus der Fig. 1 ergibt, kann der Umlenkspiegel 18 auch in unmittelbarer Nähe zu dem Umfangsrand des Wafers 6 angeordnet werden, so dass sich auch ein streifender Einfall des Beleuchtungs-Lichtstrahls 37 in einfacher Weise realisieren lässt. Etwaige Abbildungsoptiken, die zur Abbildung und Strahlformung des Beleuchtungs-Lichtstrahls dienen, etwa eine Linse oder ein Objektiv, können gemäß der vorliegenden Erfindung stromaufwärts von dem Umlenkspiegel 18 angeordnet werden.

Gemäß der Fig. 1 ist die Auflicht-Beleuchtungseinrichtung 2 senkrecht zu der Oberfläche 32 des Wafers 6 ausgerichtet und befindet sich die Auflicht-Beleuchtungseinrichtung 2 in einer Draufsicht auf die Wafer-Inspektionsvorrichtung 1 neben der Oberfläche 32 des Wafers 6. Durch die Umlenkung können die Position und Orientierung der Auflicht-Beleuchtungseinrichtung 2 sehr variabel gehalten werden. Beispielsweise kann die Auflicht-Beleuchtungseinrichtung 2 auch im Wesentlichen parallel zu der Oberfläche des Wafers ausgerichtet sein und in Draufsicht auf den Wafer 6 neben dem Wafer 6 angeordnet sein und kann der Beleuchtungs-Lichtstrahl 37, der von dem Umlenkspiegel 18 reflektiert wird, im Wesentlichen radial einwärts gerichtet auf die Oberfläche 32 des Wafers 6 einfallen.

Durch geeignetes koordiniertes Verschwenken der Auflicht-Beleuchtungseinrichtung 2 und des Umlenkspiegels 18 sowie durch vertikales und/oder horizontales Verschieben des Umlenkspiegels 18 lässt sich gewährleisten, dass beim Ändern des Einfallswinkels α die Lage des beleuchteten Bereichs 8 auf der Oberfläche 32 des Wafers 6 im Wesentlichen ortsfest bleibt.

Während in der Fig. 1 dargestellt ist, dass der Umlenkspiegel 18 ein Planspiegel ist, kann dieser auch durch einen konvexen oder konkaven Hohlspiegel, durch diffraktive optische Elemente, beispielsweise Beugungsgitter, oder durch refraktive optische Elemente, beispielsweise Prismen oder Prismenanordnungen, ersetzt werden.

Eine Lichtquelle kann in der Auflicht-Beleuchtungseinrichtung 2 unmittelbar vorgesehen sein. Wie in der Fig. 1 dargestellt, kann die Auflicht-Beleuchtungseinrichtung 2 auch eine externe Lichtquelle 11 umfassen, deren Licht über ein Lichtleiterbündel 12 in den Strahlengang eingekoppelt wird. Die Lichtquelle 11 kann eine monochromatische oder polychromatische Lichtquelle sein. Als monochromatische Lichtquellen eignen sich insbesondere LEDs oder LED-Zeilenanordnungen. Als polychromatische Lichtquellen eignen sich insbesondere Blitzlichtlampen, Weißlicht-LEDs, Halogenlampen, Leuchtstoffröhren und dergleichen. Die Lichtquelle 11 kann kontinuierlich betrieben werden. Bevorzugt wird die Lichtquelle 11 jedoch getaktet betrieben, beispielsweise als Blitzlicht, das synchron zu der Bilderfassung ausgelöst wird, d. h. immer dann, wenn ein neuer Wafer 6 orientiert an die Wafer-Aufnahmeeinrichtung 7 übergeben wird.

Ganz besonders bevorzugt werden als Auflicht-Beleuchtungseinrichtung 2 Linien-Faserbeleuchtungen, deren linienförmig abgestrahltes Licht mit einer Zylinderlinse geformt wird, um den Bereich 8 homogen zu beleuchten.

Die Kamera 4 ist über eine Datenleitung 13 mit einer Datenausleseeinrichtung 14 verbunden, welche die erfassten Bilddaten auswertet oder zwischenspeichert, etwa für eine spätere Bildauswertung. Die Datenausleseeinrichtung 14 ist bevorzugt ein Computer mit einem Framegrabber, der die Zeilen einer CCD-Kamera 4 periodisch oder getaktet, beispielsweise synchron zur Auslösung des Blitzlichts, ausliest. Die ausgelesenen Bilddaten können auch auf dem Monitor 15 dargestellt oder dort mittels geeigneter Software ausgewertet dargestellt werden.

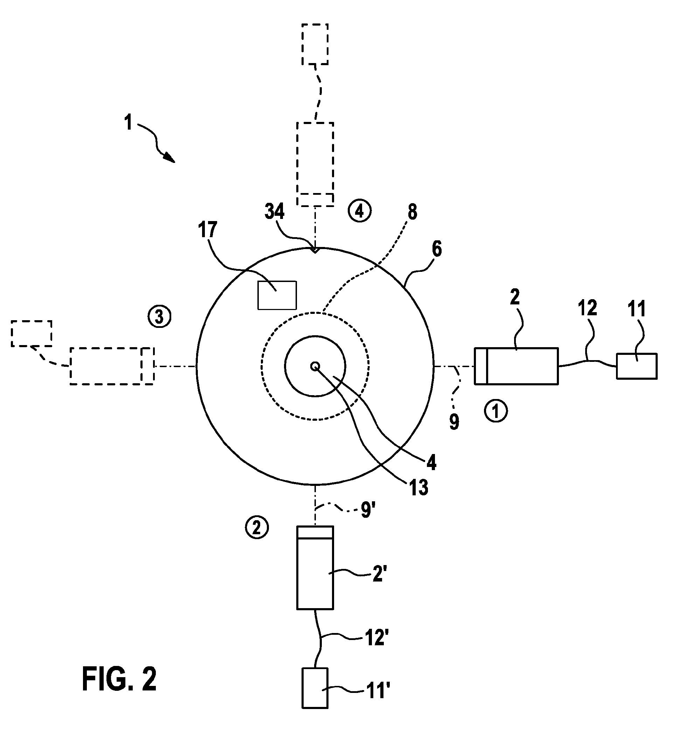

Die Fig. 2 zeigt in einer schematischen Draufsicht die Wafer-Inspektionsvorrichtung 1 gemäß der Fig. 1. Wie in der Fig. 2 dargestellt ist, umfasst die Wafer-Inspektionsvorrichtung 1 zwei Auflicht-Beleuchtungseinrichtungen 2, 2', die, in Draufsicht auf den Wafer 6 betrachtet, unter einem rechten Winkel zueinander ausgerichtet sind. Das Licht der Lichtquelle 11, 11' wird über jeweilige Lichtleiterbündel 12, 12' in die jeweilige Auflicht-Beleuchtungseinrichtung 2, 2' eingekoppelt. Wie in der Fig. 2 dargestellt, ist der Wafer 6 unter einer vorgebbaren Orientierung in der Wafer-Inspektionsvorrichtung 1 gehalten.

Auf der Oberfläche des Wafers 2 können linienförmig verlaufende Strukturen (nicht dargestellt) ausgebildet sein, die die Oberfläche des Wafers 6 in rechteckförmige Unterbereiche 17 unterteilen können, beispielsweise in einzelne Dies. An dem Umfangsrand des Wafers 6 ist ein Notch 34 oder ein Flat vorgesehen, das zur Orientierung des Wafers 6 dient. Sämtliche Prozessschritte zur Ausbildung von Strukturen auf dem Wafer 6 werden unter einer vorgegebenen Orientierung des Wafers 6 ausgeführt. Weil das Layout der auszubildenden Strukturen bekannt ist, kann aus der Lage des Notches 34 oder des Flats auf dem Umfangsrand des Wafers 6 in eindeutiger Weise auf den Verlauf der linienförmigen Strukturen geschlossen werden. Der Wafer 6 kann seinerseits mit Hilfe eines Prealigners fest vorgebbar orientiert werden. Der Prealigner (nicht dargestellt) kann Bestandteil der Wafer-Inspektionsvorrichtung 1 sein oder kann stromaufwärts der Wafer-Inspektionsvorrichtung 1 positioniert sein, in welchem Falle der Wafer 6 mit einer vorgegebenen Orientierung an die Wafer-Inspektionsvorrichtung 1 übergeben wird.

Wie durch die gestrichelten Linien in der Fig. 2 angedeutet, bestehen mehrere Möglichkeiten, zwei Auflicht-Beleuchtungseinrichtungen 2 so um den Wafer 6 herum anzuordnen, dass die Projektionen der jeweiligen Beleuchtungsachsen auf die Oberfläche des Wafers 6 im Wesentlichen orthogonal zueinander sind. Diese Positionen sind in der Fig. 2 mit den Ziffern 1 bis 4 bezeichnet Positionen. Die an den mit den Ziffern 1 bis 4 bezeichneten Positionen angeordneten Auflicht-Beleuchtungseinrichtungen 2, 2' können selektiv zugeschaltet werden. Gemäß der vorliegenden Erfindung können die zwei Beleuchtungs-Lichtstrahlen in der Projektion auf die Oberfläche des Wafers 6 zueinander orthogonal oder gegenläufig einfallen, wenn nur zwei Auflicht-Beleuchtungseinrichtung 2 verwendet werden. Es ist darauf zu achten, dass der von einer jeweiligen Auflicht-Beleuchtungseinrichtung 2 beleuchtete Bereich 8 mit dem von einer anderen Auflicht-Beleuchtungseinrichtung 2' beleuchteten Bereich 8 ausreichend überlappt, vorzugsweise im Wesentlichen vollständig.

Ganz besonders bevorzugt wird eine Geometrie mit zwei Auflicht-Beleuchtungseinrichtungen 2, 2' verwendet, die so auf die Oberfläche des Wafers 6 einstrahlen, dass die Projektionen der Beleuchtungsachsen 9, 9' auf die Oberfläche 32 des Wafers 6 zueinander orthogonal verlaufen und sich in einem Auftreffpunkt schneiden, wo auch die Abbildungsachse 10 der Kamera 4 die Oberfläche des Wafers 6 schneidet.

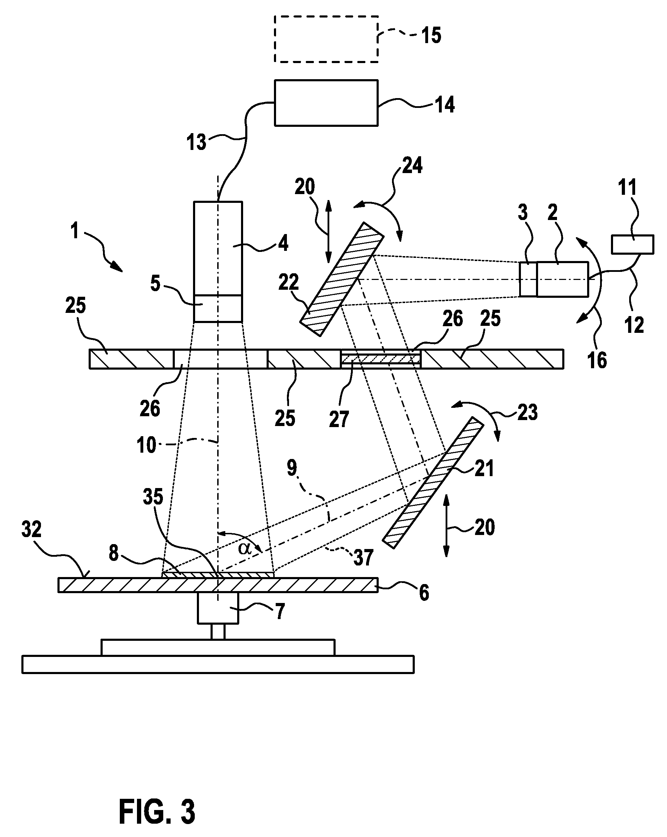

Die Fig. 3 zeigt einen Querschnitt durch eine weitere Ausführungsform einer Wafer-Inspektionsvorrichtung gemäß der vorliegenden Erfindung. Gemäß der Fig. 3 ist der Umlenkspiegel 18 ersetzt durch eine Periskop-Anordnung von Umlenkspiegeln 21, 22, die den Strahlengang des Beleuchtungs-Lichtstrahls 37 falten und in der Höhe versetzen. Die beiden Umlenkspiegel 21, 22 sind im Wesentlichen parallel, aber höhenversetzt zueinander angeordnet. Wie durch die Doppelpfeile 20 angedeutet, können die beiden Umlenkspiegel 21, 22 gesondert oder koordiniert gemeinsam in der Höhe und/oder senkrecht dazu verfahren werden. Wie durch die Doppelpfeile 23, 24 angedeutet, können die beiden Umlenkspiegel 21, 22 gesondert oder koordiniert miteinander verschwenkt werden. Wie durch den Doppelpfeil 16 angedeutet, kann auch die Auflicht-Beleuchtungseinrichtung verschwenkt werden. Somit lässt sich der Einfallwinkel α, unter dem der Beleuchtungs-Lichtstrahl auf die Oberfläche 32 des Wafers 6 einfällt, verändern, wobei die Lage des beleuchteten Bereichs 8 auf der Oberfläche 32 des Wafers 6 beim Verändern des Einfallswinkels α im Wesentlichen unverändert bleibt. Durch die Periskop-Anordnung kann auch die Aufweitung des Beleuchtungs-Lichtstrahls in einfacher Weise geändert werden.

Bevorzugt wird eine Periskop-Anordnung, bei der der untere Umlenkspiegel 21 ortsfest gehalten ist und nur der obere Umlenkspiegel 22 verschwenkt und/oder senkrecht verfahren werden kann. In dieser Konfiguration kann die Justierung des Beleuchtungs-Lichtstrahls 37 nur mit Hilfe des oberen Umlenkspiegels 22 vorgenommen werden.

Selbstverständlich eignen sich zur Umlenkung des Beleuchtungs-Lichtstrahls 37 in der Periskop-Anordnung auch andere optische Elemente, beispielsweise Hohlspiegel, diffraktive Elemente, beispielsweise Beugungsgitter, oder auch Prismen oder Prismenanordnungen.

Gemäß der Fig. 3 bewirkt eine Trennplatte 25 eine räumliche Unterteilung der Wafer-Inspektionsvorrichtung 1. In dem dargestellten Beispiel ist der Wafer 6 und der untere Umlenkspiegel 21 der Periskop-Anordnung von Umlenkspiegeln 21, 22 unterhalb der Trennplatte 25 angeordnet ist und ist die zumindest eine Auflicht-Beleuchtungseinrichtung 2, die Bilderfassungseinrichtung 4, der obere Umlenkspiegel 22 der Periskop-Anordnung von Umlenkspiegeln 21, 22 sowie weitere, nicht dargestellte optische Elemente oberhalb der Trennplatte 25 angeordnet. Die Trennplatte 25 sorgt für einen gewissen mechanischen Schutz von unterhalb der Trennplatte 25 befindlichen Elementen, beispielsweise des Wafers 6 oder des unteren Spiegels 21. Weil die meisten Elemente oberhalb der Trennplatte 25 angeordnet sind, insbesondere die Bilderfassungseinrichtung 4, die Auflicht-Beleuchtungseinrichtung 2 und der obere Spiegel 22, können Wartungs- und Montagearbeiten an diesen Elementen ohne die Gefahr von Beschädigungen des Wafers 6 oder des unteren Spiegels 21 und ohne Verletzungsgefahr aufgrund eines unterhalb der Trennplatte 25 angeordneten Verfahrtisches (nicht dargestellt) ausgeführt werden.

Die Trennplatte 25 weist mehrere Öffnungen 26 auf, durch die hindurch der in die Bilderfassungseinrichtung 4 abgebildete Abbildungslichtstrahl sowie der Beleuchtungs-Lichtstrahl 37 verläuft. Die rechte Öffnung 26 ist von einem transparenten Element 27 verschlossen, vorzugsweise luftdicht. Die linke Öffnung 26 ist bei dem dargestellten Ausführungsbeispiel offen, kann jedoch ebenfalls von einem transparenten Element verschlossen sein.

Selbstverständlich kann die Trennplatte 25 bei der Periskop-Anordnung von Umlenkspiegeln 21, 22 gemäß der Fig. 3 auch weggelassen werden.

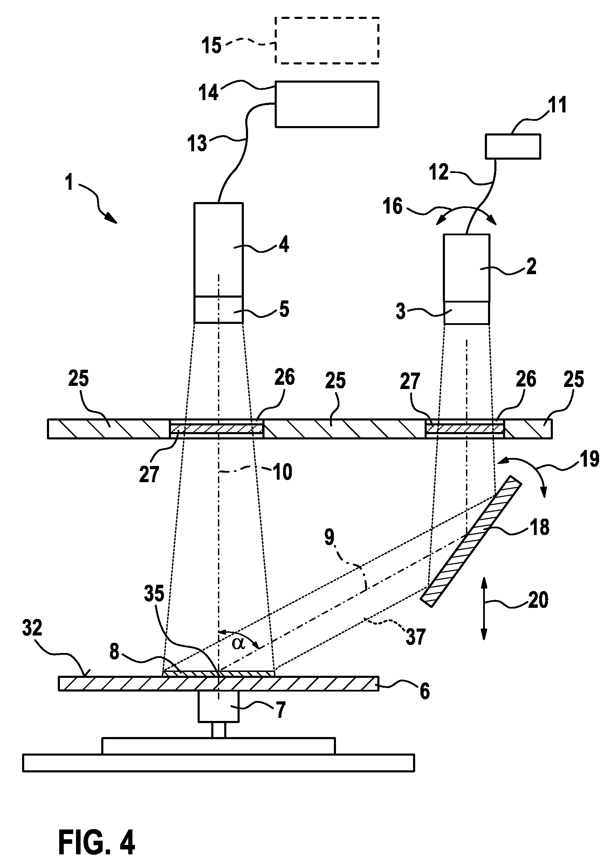

Die Fig. 4 zeigt in einem schematischen Querschnitt eine weitere Ausführungsform einer Wafer-Inspektionsvorrichtung 1 gemäß der vorliegenden Erfindung. Die Anordnung ist im Wesentlichen identisch zu der gemäß der Fig. 1, mit Ausnahme der Trennplatte 25, welche die Wafer-Inspektionsvorrichtung 1 räumlich in zwei zueinander höhenversetzte Ebenen unterteilt. Wie dargestellt, befindet sich in der linken und rechten Öffnung 26 der Trennplatte 25 jeweils eine transparente Scheibe 27. Diese transparente Scheibe kann ein zur Homogenisierung des jeweiligen Lichtstrahls dienendes Homogenisierungsmittel umfassen, beispielsweise eine Streuscheibe oder ein Mikrolinsenarray.

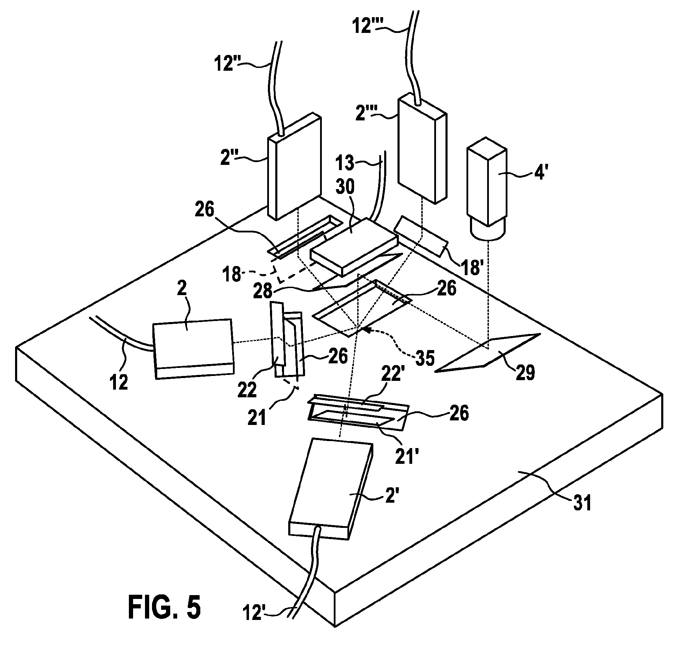

Die Fig. 5 zeigt in einer perspektivischen Anordnung eine weitere Ausführungsform einer Wafer-Inspektionsvorrichtung 1 gemäß der vorliegenden Erfindung. Sämtliche Elemente sind auf einer Montageplatte 31 angebracht. In dem unteren Teil sind die Auflicht-Beleuchtungseinrichtungen 2, 2' parallel zu der Oberfläche des nicht dargestellten Wafers ausgerichtet. Die jeweiligen Beleuchtungs-Lichtstrahlen 37 werden über die zugehörigen Periskop-Anordnungen von Umlenkspiegeln 22, 21 bzw. 22', 21' unter geneigtem Einfallswinkel auf die Oberfläche des Wafers abgebildet. Die Kamera 4 dient zur Erfassung von Streulicht, das von dem beleuchteten Bereich auf der Oberfläche des Wafers herrührt. Die Kamera 4 ist senkrecht zu der Oberfläche des Wafers ausgerichtet. Das in dem beleuchteten Bereich auf der Oberfläche des Wafers gestreute Licht wird über den teildurchlässigen Spiegel 28 und den Umlenkspiegel 29 in die Kamera 4 abgebildet. Oberhalb des teildurchlässigen Spiegels 28 befindet sich eine Flächenbeleuchtung 30, die für andere Inspektionsverfahren verwendet werden kann.

In dem oberen Teil befinden sich zwei weitere Auflicht-Beleuchtungseinrichtungen 2", 2"', deren Beleuchtungs-Lichtstrahlen mittels zugeordneter Umlenkspiegel 18, 18' in der im Zusammenhang mit der Fig. 1 beschriebenen Weise auf die Oberfläche des nicht dargestellten Wafers abgebildet werden. In der Projektion auf die Oberfläche des Wafers verlaufen sowohl die Beleuchtungs-Lichtstrahlen, die von den Auflicht-Beleuchtungseinrichtungen 2, 2' abgestrahlt werden, als auch die Beleuchtungs-Lichtstrahlen, die von den Auflicht-Beleuchtungseinrichtungen 2" und 2"' abgestrahlt werden, senkrecht zueinander.

Wenngleich in den vorstehend beschriebenen Figuren nicht dargestellt, umfasst die erfindungsgemäße Wafer-Inspektionsvorrichtung 1 einen Verfahrtisch, beispielsweise einen XY-Verfahrtisch, so dass durch geeignetes Verfahren des Wafers 6 die gesamte Oberfläche 32 des Wafers 6 abgetastet werden kann.

Es ist vorteilhaft wenn die Vorrichtung zwei Auflicht-Beleuchtungseinrichtungen 2, 2', deren Beleuchtungsachsen parallel zueinander ausgerichtet sind besitzt, wobei Bereiche 8 auf der Oberfläche 32 des Wafers 6, die jeweils von den Auflicht-Beleuchtungseinrichtungen 2, 2' beleuchtet werden, miteinander überlappen. Ferner umfasst die Vorrichtung zwei Auflicht-Beleuchtungseinrichtungen 2, 2', deren Beleuchtungsachsen 9, 9' senkrecht zueinander ausgerichtet sind, wobei Bereiche 8 auf der Oberfläche 32 des Wafers 6, die jeweils von den Auflicht-Beleuchtungseinrichtungen 2, 2' beleuchtet werden, miteinander überlappen.

Ebenso können vier Auflicht-Beleuchtungseinrichtungen 2, 2', deren Beleuchtungsachsen 9, 9' orthogonal zueinander sind vorgesehen sein, die sich in einem Bereich 8 auf der Oberfläche des Wafers schneiden, der in die Bilderfassungseinrichtung 4 abgebildet wird.

Zumindest eine der Auflicht-Beleuchtungseinrichtung 2, 2' ist eine monochromatische Lichtquelle 11, 11'. Ferner kann zumindest eine Auflicht-Beleuchtungseinrichtung 2, 2' eine polychromatische Lichtquelle 11, 11' umfasst sein. Die polychromatische Lichtquelle kann als eine Blitzlichtquelle oder Blitzlichtquellen-Zeilenanordnung ausgestaltet sein.

Eine Auflicht-Beleuchtungseinrichtung kann jeweils ein Lichtleiterbündel 12 und ein zugeordnetes abbildendes optisches Element 3 umfassen. Zusätzlich ist ein Homogenisierungsmittel 27 zum Homogenisieren des Beleuchtungs-Lichtstrahls 37 vorgesehen.

## Patentansprüche

1. Vorrichtung zur Inspektion eines Wafers (6), umfassend zumindest eine Auflicht-Beleuchtungseinrichtung (2, 2'), die einen Beleuchtungs-Lichtstrahl (37) abstrahlt, der schräg auf eine Oberfläche (32) eines zu inspizierenden Wafers (6) einfällt, und eine Bilderfassungseinrichtung (4) zum Erfassen eines Bildes der Oberfläche (32) in einer Dunkelfeld-Anordnung, **dadurch gekennzeichnet, dass** zumindest eine Umlenkeinrichtung (20; 21, 22) vorgesehen ist, um einen zugeordneten Beleuchtungs-Lichtstrahl (37) auf die Oberfläche (32) des Wafers (6) umzulenken.

2. Vorrichtung nach Anspruch 1, bei der die zumindest eine Umlenkeinrichtung jeweils einen Spiegel (18) umfasst, wobei die zugeordnete Auflicht-Beleuchtungseinrichtung (2, 2') senkrecht oder parallel zu der Oberfläche des Wafers ausgerichtet ist.

3. Vorrichtung nach Anspruch 1, bei der die zumindest eine Umlenkeinrichtung jeweils eine Periskop-Anordnung von Spiegeln (21, 22) umfasst, wobei die zugeordnete Auflicht-Beleuchtungseinrichtung (2, 2') parallel zu der Oberfläche (32) des Wafers (6) ausgerichtet ist.

4. Vorrichtung nach Anspruch 2 oder 3, wobei der oder die Spiegel (18; 21, 22) verschwenkbar und/oder verfahrbar gehaltert sind.

5. Vorrichtung nach einem der vorhergehenden Ansprüche, bei der eine von der Bilderfassungseinrichtung (4) festgelegte Abbildungsachse (10) senkrecht zur Oberfläche (32) des Wafers (6) orientiert ist.

6. Vorrichtung nach dem vorhergehenden Anspruch, bei der eine von einer Auflicht-Beleuchtungseinrichtung (2, 2') festgelegte Beleuchtungsachse (9) und die Abbildungsachse (10) eine Ebene aufspannen, die senkrecht zu der Oberfläche (32) des Wafers orientiert ist.

7. Vorrichtung nach einem der vorhergehenden Ansprüche, bei der ein Einfallswinkel (a) des Beleuchtungs-Lichtstrahls (37) veränderbar ist, wobei ein beleuchteter Bereich (8) auf der Oberfläche (32) des Wafers (6) ortsfest bleibt, wenn der Einfallswinkel geändert wird.

8. Vorrichtung nach einem der vorhergehenden Ansprüche, bei der der Einfallswinkel (a) im Bereich von etwa 3º bis etwa 90º, bevorzugter im Bereich von etwa 20º bis etwa 90º und noch bevorzugter im Bereich von etwa 40º bis etwa 86º liegt.

9. Vorrichtung nach einem der Ansprüche 2 bis 8, bei der eine Trennplatte (25) vorgesehen ist, wobei zumindest ein Spiegel (18; 21, 22) unterhalb der Trennplatte (25) angeordnet ist, um den Beleuchtungs-Lichtstrahl (37) auf die Oberfläche (32) des Wafers (6) umzulenken.

10. Vorrichtung nach Anspruch 9, bei der der Wafer (6) unterhalb der Trennplatte (25) anordenbar ist und die zumindest eine Auflicht-Beleuchtungseinrichtung (2, 2') und/oder die Bilderfassungseinrichtung (4) oberhalb der Trennplatte (25) angeordnet sind.

11. Vorrichtung nach Anspruch 9 oder 10, bei der die Trennplatte (25) zumindest eine Öffnung (26) aufweist, so dass der Beleuchtungs-Lichtstrahl (37) und/oder Licht von der Oberfläche (32) des Wafers (6) die Trennplatte (25) durchqueren kann.
